Europäisches Patentamt

European Patent Office

Office européen des brevets

(11) Numéro de publication: **0 418 144 A1**

# DEMANDE DE BREVET EUROPEEN

(21) Numéro de dépôt: **90402497.3**

(22) Date de dépôt: **11.09.90**

(51) Int. Cl.⁵: **G07F 7/08,** G06F 15/21

(30) Priorité: **12.09.89 FR 8911875**

(43) Date de publication de la demande:
**20.03.91 Bulletin 91/12**

(84) Etats contractants désignés:
**AT BE CH DE ES FR GB GR IT LI NL SE**

(71) Demandeur: **MICHAUD, André**
**27E, avenue du Plessis**

**F-92290 Chatenay-Malabry(FR)**

(72) Inventeur: **MICHAUD, André**
**27E, avenue du Plessis**
**F-92290 Chatenay-Malabry(FR)**

(74) Mandataire: **Rodhain, Claude et al**
**Cabinet Claude Rodhain 30, rue la Boétie**
**F-75008 Paris(FR)**

(54) **Procédé de limitation des risques attachés à une transaction informatique.**

(57) L'invention concerne un procédé d'analyse et de contrôle du déroulement de transactions informatiques dans lequel, à chaque transaction:
- un utilisateur requiert d'un dispositif la délivrance de biens, de services ou de valeurs pour un montant demandé (MD) donné,
- le dispositif analyse cette requête par comparaison avec des données statistiques prédéterminées représentatives de l'évaluation d'un risque d'utilisation non conforme, ces données statistiques comprenant des données relatives au nombre moyen ou au montant moyen des transactions effectuées au cours de périodes successives données, et
- le dispositif élabore une réponse autorisant ou non, en fonction du résultat de cette analyse, la délivrance d'un montant accordé (MA),
  Selon l'invention, lesdites données statistiques prédéterminées résultent d'une division du temps en périodes consécutives, inégales, dont les durées sont choisies de telle manière que la probabilité qu'une transaction soit effectuée ou qu'un montant moyen soit demandé au cours de chacune de ces périodes soit essentiellement constante.

EP 0 418 144 A1

FIG_1

# PROCÉDÉ DE LIMITATION DES RISQUES ATTACHÉS À UNE TRANSACTION INFORMATIQUE

La présente invention concerne un procédé d'analyse et de contrôle du déroulement de transactions informatiques.

Ce procédé peut s'appliquer à une très grande variété de transaction exécutées par des automates, réseaux de communication, terminaux informatiques, etc. destinés à délivrer des biens, des services ou des valeurs à un utilisateur.

Bien que, dans la suite, le procédé de l'invention sera essentiellement décrit à propos d'une application à un distributeur automatique de billets, une telle application n'est aucunement limitative et le procédé de l'invention pourrait être mis en oeuvre aussi bien pour l'analyse et le contrôle d'autres transactions.

Ainsi, dans son principe, ce procédé peut s'appliquer au contrôle du fonctionnement d'autres appareils automatiques (téléphones publics par exemple) ou de réseaux (notamment de réseaux télématiques) destinés à distribuer des produits ou des valeurs, à délivrer des services ou à fournir des informations, dès lors que ces appareils ou réseaux peuvent être sujets aux fraudes ou aux utilisations anormales ou abusives que l'on va décrire ci-dessous.

Le procédé de l'invention s'applique tout particulièrement aux centres serveurs de données et de services reliés à des terminaux informatiques ou vidéotex. En effet, dans ce cas, le procédé de l'invention se révèle particulièrement intéressant compte tenu de la diffusion très large dans le public des terminaux vidéotex, multipliant ainsi les probabilités de fraude et les risques qui y sont attachés.

On utilisera dans la suite de la description le terme ≪ automate ≫ pour désigner de façon générique l'ensemble constitué par le dispositif assurant le dialogue avec l'utilisateur et délivrant les biens, les services ou les valeurs demandées, considéré avec l'ensemble de ses circuits de gestion et de commande associés.

Par ailleurs, bien que, dans la suite de la description, on décrira un tel ≪ automate ≫ sous forme d'une machine autonome affectée à la gestion d'un unique appareil distributeur et pourvue de microcircuits spécialisés mettant en oeuvre le procédé de l'invention sous forme matérielle ou logicielle, d'autres formes de réalisation de cet automate pourrait aussi bien être envisagée, notamment:
- en configurant de façon appropriée, sous forme informatique équivalente, un ordinateur personnel doté de circuits d'interfaçage et d'un logiciel approprié,
- sous forme d'un système informatique plus puissant, permettant de gérer en parallèle un grand nombre d'automates, par exemple un réseau de plusieurs centaines d'automates gérés en ligne par un centre d'autorisation commun, ou
- par incorporation directe du procédé de l'invention dans le logiciel de commande d'un automate préexistant ou de l'ordinateur gestionnaire d'un réseau d'automates.

De façon générale, dans toute les transactions évoquées plus haut, l'automate différencie les utilisateurs autorisés de ceux qui ne le sont pas au moyen de ≪ laissez-passer ≫ tel qu'un mot de passe ou un code confidentiel et/ou une carte accréditive devant être introduite dans l'automate.

Ces automates sont susceptibles d'être fraudés ou utilisés de façon non conforme, aussi bien par une personne non autorisée réussissant à connaître un mot de passe que par le véritable titulaire du laissez-passer, qui tenterait d'utiliser de façon abusive ou anormale l'autorisation dont il bénéficie pour faire fonctionner l'automate. Toutes ces formes d'utilisation non conformes seront dans la suite désignées de façon générique sous le terme de ≪ fraude ≫.

La difficulté vient du fait que, dès lors qu'un utilisateur fournit à l'automate un laissez-passer cohérent et apparemment correct, il n'existe aucun moyen de déterminer de façon absolue si cet utilisateur est un fraudeur ou non.

De la même façon, il existe peu de parades efficaces contre l'utilisation abusive consistant à dupliquer à grande échelle un laissez-passer authentique, le fraudeur effectuant avec chacun des duplicata une transaction sur un automate différent.

Pour parer à ce risque, on a déjà essayé de détecter les utilisations exceptionnellement élevées d'un automate, ces utilisations exceptionnelles pouvant être l'indice d'une fraude.

Les automates sont à cet effet pourvus de systèmes que l'on désignera par la suite sous le terme de ≪ limiteurs de risque ≫ et qui analysent le nombre et/ou le montant des transactions effectuées pendant des périodes successives données, par exemple pendant des tranches successives d'un quart d'heure.

Lorsque, au cours de cette tranche d'un quart d'heure, le montant cumulé des retraits atteint un plafond fixé prédéterminé, le limiteur de risque interrompt le fonctionnement de l'automate - et empêche donc toute délivrance - jusqu'au début de la nouvelle période suivante, c'est-à-dire jusqu'au quart d'heure suivant ; le plafond correspondant à chaque période est fixé à partir de données statistiques prédéterminées représentatives de l'évaluation d'un risque de fraude pour le période concernée.

L'efficacité d'un tel limiteur de risque est cependant réduite. En effet:

- tout d'abord, il ne tient pas compte des phénomènes d'afflux soudains de porteurs normaux, non fraudeurs (par exemple, dans le cas d'un automate installé dans une gare, peu après l'arrivée d'un train), à l'intérieur d'une tranche horaire donnée : l'utilisation exceptionnellement élevée va provoquer l'arrêt de l'automate jusqu'au quart d'heure suivant, ce qui peut provoquer une indisponibilité assez longue si l'afflux a eu lieu en début de tranche horaire.

- en second lieu, il est inefficace contre un fraudeur expérimenté.

- enfin, il ne permet pas d'adopter le meilleur compromis entre l'indisponibilité de l'automate vis-à-vis des porteurs légitimes et l'efficacité contre les fraudeurs.

Le but de la présente invention est de perfectionner les méthodes utilisées jusqu'à présent, afin de limiter considérablement - typiquement dans un rapport de dix et plus par rapport aux procédés actuels d'analyse - les effets de fraudes importantes.

On verra en outre que ce procédé est mis en oeuvre de façon entièrement automatique et auto-adaptative, grâce à l'intégra tion d'un certain nombre d'asservissements permettant de stabiliser le système autour d'une valeur de consigne qui peut être un taux de fausses alarmes.

Ainsi, on introduira par exemple dans le système la valeur de consigne ≪ ne pas pénaliser plus d'un utilisateur honnête sur mille ≫, et le procédé ajustera de lui-même son propre fonctionnement de manière à respecter et maintenir cette valeur de consigne.

L'évaluation du procédé de l'invention a permis de constater que celui-ci est particulièrement performant. Par exemple, avec les valeurs typiques de paramétrage qui seront données plus loin dans l'exemple de réalisation, on constate que le limiteur de risque entre en action très rapidement, généralement après trois ou quatre opérations frauduleuses. Le fraudeur doit alors abandonner sa tentative, aller à un autre automate, etc. et perd du temps, ce qui limite considérablement son gain potentiel et réduit donc notablement l'échelle des fraudes possibles.

Le procédé de l'invention est un procédé du type général précité, c'est-à-dire dans lequel, à chaque transaction : un utilisateur requiert d'un dispositif la délivrance de biens, de services ou de valeurs pour un montant demandé donné ; le dispositif analyse cette requête par comparaison avec des données statistiques prédéterminées représentatives de l'évaluation d'un risque d'utilisation non conforme, ces données statistiques comprenant des données relatives au nombre moyen ou au montant moyen des transactions effectuées au cours de périodes successives donnée ; et le dispositif élabore une réponse autorisant ou non, en fonction du résultat de cette analyse, la délivrance d'un montant accordé.

De façon caractéristique de l'invention, lesdites données statistiques prédéterminées résultent d'une division du temps en périodes consécutives, inégales, dont les durées sont choisies de telle manière que la probabilité qu'une transaction soit effectuée ou qu'un montant moyen soit demandé au cours de chacune de ces périodes soit essentiellement constante.

De préférence, pour assurer une fonction de limitation progressive, le dispositif élabore et met à jour au cours du temps une fonction donnant une évaluation d'un niveau de risque total, et, en cas de transaction, le dispositif limite, à un instant donné, la délivrance du montant accordé à une valeur au plus égale à la fois au montant demandé et à une limite égale à un plafond prédéterminé diminué de la valeur instantanée du risque total.

Dans ce cas, à l'intérieur de chaque période, le dispositif peut mettre à jour la valeur du risque total par addition, après chaque transaction, de la valeur d'un niveau de risque élémentaire attaché à cette transaction, à la valeur précédente du risque total. Le risque élémentaire attaché à chaque transaction est alors une fonction donnant, pour chacune des périodes successives à venir, une série d'évaluations successives déterminées à partir du montant accordé délivré par le dispositif pour cette transaction, ces évaluations successives étant déterminées de manière à donner une évaluation du risque élémentaire essentiellement décroissante en fonction du rang des périodes successives.

Par ailleurs, ledit plafond prédéterminé peut être déterminé à partir d'une valeur fixe de consigne initialement introduite dans le dispositif et dans lequel, en outre, le dispositif détermine l'apparition d'un incident lorsqu'il ne délivre qu'un montant accordé inférieur au montant demandé, et asservit ladite valeur fixe de consigne initialement introduite sur un taux moyen d'incidents essentiellement constant au cours du temps.

Selon une caractéristique avantageuse, lesdites durées définissant la division du temps en périodes consécutives inégales sont déterminées par interpolation à partir des valeurs d'un tableau de valeurs discrètes statistiques préétablies correspondant à une division du temps en tranches consécutives.

Dans ce cas, le dispositif peut notamment:

- déterminer l'apparition d'un incident lorsqu'il ne délivre qu'un montant accordé inférieur au montant demandé, et asservir lesdites valeurs discrètes statistiques préétablies initialement introduites de manière à maintenir essentiellement constante la probabilité qu'une transaction soit effectuée ou qu'un montant moyen soit demandé au cours de chacune des périodes correspondantes;

- utiliser un tableau de valeurs discrètes statistiques différent pour chacun des différents jours;

- pondérer les valeurs discrètes statistiques du tableau en fonction des variations cycliques constatées desdites valeurs, notamment selon le quantième du mois et/ou le mois de l'année ; et/ou

- pondérer les valeurs discrètes statistiques du tableau en fonction des paramètres typiques liés à des transactions frauduleuses antérieurement constatées.

Enfin, le procédé de l'invention prévoit un moyen pour parer une possibilité subsistante de fraude. En effet, dans beaucoup de systèmes une utilisation anormalement faible du système peut être considérée comme un signe annonciateur d'une possibilité de fraude.

À cet effet, on prévoit de considérer non seulement les utilisations exceptionnellement élevées de l'automate, mais également ses utilisations exceptionnellement faibles.

Pour cela, le dispositif élabore et met à jour au cours du temps une évaluation d'un niveau de risque aggravé inversement fonction de la probabilité pour que, à un instant donné, il n'y ait pas eu de transaction effectuée depuis un nombre donné de périodes consécutives, le risque aggravé étant ajouté au risque total sous forme d'une transaction fictive de montant donné, et, en cas de transaction dans une période postérieure, le dispositif limite, à un instant donné, la délivrance du montant accordé à une valeur au plus égale à la fois au montant demandé et à ladite limite.

Cette disposition peut être mise temporairement hors service lorsque l'on veut obtenir un redémarrage rapide de l'automate après un arrêt dû à des circonstances normales (maintenance, rechargement de billets,...).

On va maintenant décrire un exemple de réalisation de l'invention, appliqué à la gestion d'un distributeur automatique de billets de banque.

La figure 1 est la représentation sous forme de schéma par blocs d'un dispositif permettant de mettre en oeuvre le procédé de l'invention.

La figure 2 illustre sous forme de tableau la manière dont on détermine l'évolution du risque élémentaire au cours des périodes à venir.

La figure 3 illustre, sous forme de tableau, la manière dont on détermine le risque total pour les périodes à venir en fonction des risques élémentaires précédemment déterminés.

La figure 4 est une représentation d'un tableau de valeurs statistiques prédéterminées permettant de réaliser la division du temps selon le procédé de l'invention.

La figure 5 est une courbe montrant, pour l'une des colonnes du tableau de la figure 4, la suite des valeurs discrètes et la fonction d'interpolation obtenue.

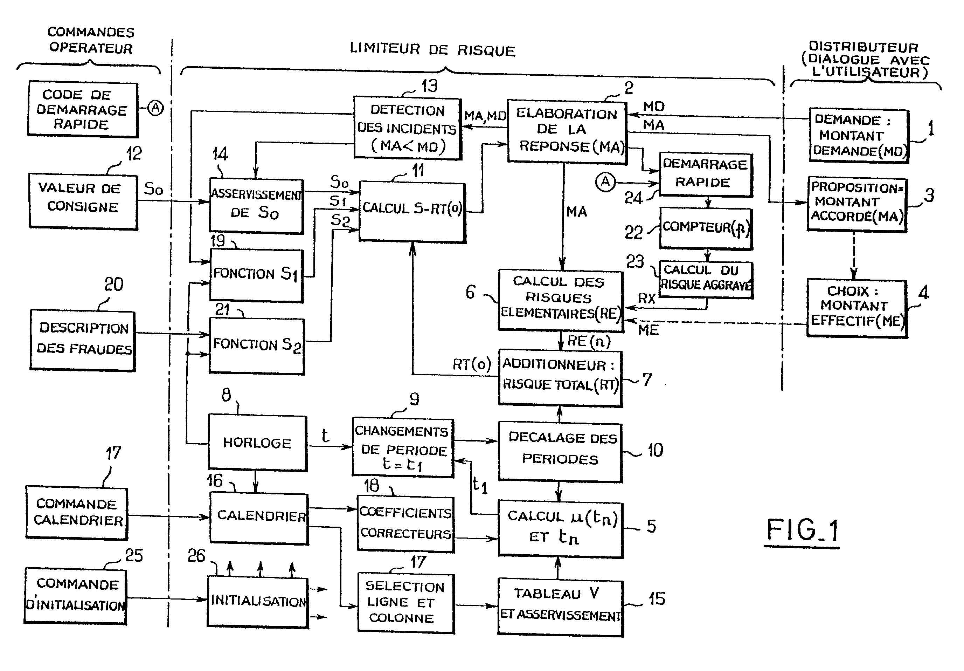

La figure 1 représente, de façon schématique, les divers blocs fonctionnels permettant la mise en oeuvre de l'invention.

Le distributeur proprement dit, qui est constitué par les éléments 1, 3 et 4 illustrés à droite de la figure, envoie au limiteur de risque selon l'invention (partie centrale de la figure) un certain nombre d'informations et reçoit de celui-ci une réponse.

Un tel échange demande/réponse constitue une « transaction » au sens de l'invention.

Dans l'exemple d'un distributeur de billets de banque, la demande est élaborée par le bloc 1 lorsque l'utilisateur désirant se faire délivrer des billets introduit sa carte dans l'appareil et indique par un clavier le montant MD qu'il souhaite obtenir. Ces informations, ainsi que d'autres (qui ne sont pas nécessaires à la mise en oeuvre du procédé de l'invention) sont transmises au bloc 2 du limiteur de risque qui élabore une réponse constituée essentiellement par un montant accordé MA, le plus souvent égal au montant demandé MD, mais qui peut être inférieur à celui-ci ou même nul lorsque le limiteur de risque entre en action.

Le distributeur reçoit cette information de montant accordé MA et, si tout est correct par ailleurs (vérification du code confidentiel, de la liste des oppositions, etc.) propose à l'utilisateur ce montant MA (bloc 3). L'utilisateur peut éventuellement renoncer à la transaction ou demander un montant effectif ME inférieur au montant accordé MA (bloc 4). En pratique, et pour la simplicité de la description, on considérera le montant accordé MA délivré par l'élément 2 du limiteur de risque plutôt que le montant effectif ME délivré par le bloc 4 du distributeur. Cependant, en toute rigueur, c'est ce montant ME correspondant à la somme effectivement retirée qu'il faudrait prendre en compte, notamment pour le calcul du risque et l'asservissement du limiteur de risque. En pratique, dans la très grande majorité des cas le montant effectif ME est égal au montant accordé MA, et le fait de choisir l'un ou l'autre a peu d'incidence sur l'efficacité du limiteur de risque.

Comme on l'a indiqué plus haut, le principe de base du limiteur de risque de l'invention consiste à diviser le temps en périodes consécutives de longueurs inégales. Cette longueur est donc fonction du temps, et on la notera $u(t)$ ou $u(t_n)$, n étant le rang de la période considérée.

On détermine la longueur $u(t_n)$ (d'une manière que l'on explicitera plus bas) de telle sorte que la probabilité d'avoir une demande de retrait pendant la période correspondante $[t_n, t_{n+1}]$ soit constante. Dans l'exemple qui suivra, on fixera cette valeur de probabilité à 40 %.

La longueur $u(t)$ peut ainsi varier, selon les périodes, de quelques secondes aux heures de pointe à plusieurs heures aux heures creuses (périodes nocturnes).

En variante, on peut également définir $u(t)$ non plus par la probabilité d'avoir une demande de retrait, mais à partir de la moyenne des montants demandés au cours de la période considérée, par exemple 40% du montant moyen constaté, soit 250 F pour un montant moyen de 625 F.

Les différentes longueurs $u(t)$ sont calculées par le bloc 5, qui calcule également, de proche en proche, les heures de début $t_n$ et de fin $t_{n+1}$, conformément à la relation :

$$t_{n+1} = t_n + u(t_n)$$

Connaissant une première valeur $t_0$, on pourra ainsi déterminer, de proche en proche, toutes les valeurs $t_n$.

### Évaluation du risque élémentaire

Supposons qu'au cours d'une période donnée (que l'on appellera période zéro, et dont la longueur sera donc $u(t_0)$) un retrait de montant MA soit effectué à l'instant $t(t_0 \leq t < t_1)$.

Ce retrait a une certaine probabilité d'être frauduleux, et correspond donc à l'apparition d'un risque, que l'on appellera ≪ risque élémentaire ≫, et que l'on désignera RE.

Le risque élémentaire RE lié à ce retrait va cependant s'atténuer au fil du temps. A cet effet, on définira RE par une fonction RE(n), n désignant les périodes successives (n = 0, 1, 2 ...) incluant et suivant la période en cours (n = 0) considérée, et telle que RE(n) soit essentiellement décroissante lorsque n augmente.

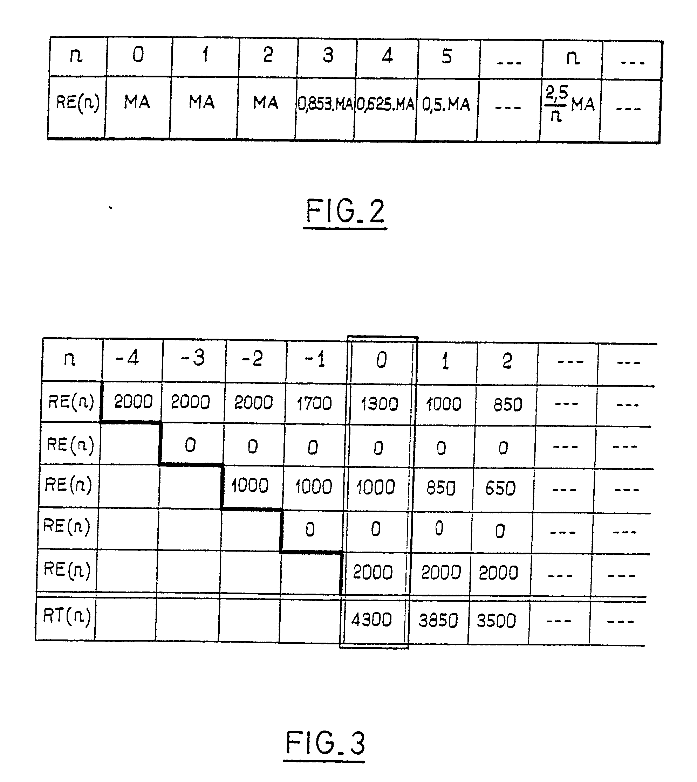

On pourra par exemple prendre pour RE(n) la fonction illustrée sur le tableau de la figure 2, cette fonction étant définie par les valeurs de la suite :

RE(n) = MA pour n = 0, 1 ou 2, et

RE(n) = $(2,5/n) \times$ MA pour $n \geq 3$.

On voit qu'avec une telle fonction RE(n) devient négligeable lorsque n devient élevé, c'est-à-dire lorsque le fraudeur a été suffisamment retardé dans ses actions et dans ses gains.

On pourra ainsi limiter le calcul de RE(n) à une valeur maximale (par exemple n = 100), fonction des capacités de traitement du limiteur de risque.

On peut également remplacer tout ou partie de la fonction que l'on vient de définir par une fonction proche, par exemple une fonction exponentielle, ce qui peut simplifier les différents calculs nécessaires.

Ce risque élémentaire RE(n) est déterminé par le bloc fonctionnel 6 à partir des données MA délivrées par le bloc 2 (ou, en variante, à partir des montants effectifs ME délivrés par le bloc 4).

### Évaluation du risque total

Le risque total (que l'on désignera RT) est la valeur d'après laquelle le limiteur de risque décidera de la conduite à tenir vis-à-vis d'une demande donnée : accord du montant demandé, limitation (réduction) du montant demandé, ou refus de délivrance de tout montant.

Ce risque total est déterminé à partir des risques élémentaires propres attachés à chacun des retraits antérieurs.

Ce risque total est une valeur évolutive mise à jour à chaque retrait, donc éventuellement plusieurs fois au cours d'une même période si plusieurs retraits sont effectués au cours de cette période.

On appellera RT(n) le risque total RT en début de la période n et $RT'(n)$ le risque total en fin de cette même période.

Le risque total en fin de période est défini de la manière suivante (pour m retraits effectués au cours de cette période):

$$RT'(n) = RT(n) + \sum_{i=1}^{m} RE_i(n)$$

S'il n'y a pas eu de retrait au cours de la période considérée, on aura $RT' = RT$. S'il y a eu un ou plusieurs retraits, le risque va croître au cours de la période, et on aura $RT' > RT$.

L'opération de cumul définie par la relation ci-dessus est effectuée par un circuit additionneur 7 à partir des différentes valeurs de risque élémentaire déterminées, de la manière indiquée précédemment, par le bloc 6.

Ein fin de période, on procède à un décalage des numéros de période, de la manière que l'on va indiquer ci-dessous et que l'on a illustrée figure 3.

Pour permettre ce décalage, le limiteur de risque est doté d'une horloge interne 8 qui fournit la variable temporelle t. Un comparateur 9 reçoit t et la valeur $t_1$ (valeur calculée correspondant à la fin de la période en cours), élaborée par le bloc 5 de la manière indiquée plus haut. Lorsque $t = t_1$, un ordre de changement de période est envoyé au bloc 10, qui va décaler la numérotation des périodes d'une unité, la période (n) devenant la période (n - 1).

L'évaluation des risques élémentaires et du risque total se fera comme précédemment, mais les périodes vont se trouver décalées d'une unité, comme illustré figure 3 sur un exemple (dans cet exemple, pour simplifier, on a supposé qu'il n'y a pas plus d'un retrait par période, et on a arrondi les montants à la cinquantaine de francs la plus proche).

Au cours d'une période antérieure (dans cet exemple, la période -4, c'est-à-dire quatre périodes avant la période en cours) a eu lieu un retrait de 2000 F, ce qui donne pour le risque élémentaire la suite de valeurs 2000, 2000, 2 000, 1700, 1300, 1000, 850, ...

Au cours de la période suivante (période -3), aucun retrait n'est effectué.

Au cours de la période suivante (période -2) un retrait de 1000 F est effectué, ce qui donne pour le risque élémentaire la suite de valeurs 1000, 1000, 1000, 850, 650, ... .

Pour l'évaluation du risque total, on cumule ces différentes valeurs respectives à celles établies pour la période -4. Mais pour tenir compte du fait qu'il ne s'agit pas de retraits effectués au cours d'une même période, on décale vers la droite, de deux colonne dans cet exemple, cette série de valeurs par rapport à la première.

On procède de même pour les risques élémentaires attachés aux périodes suivantes : dans cet exemple, on n'a aucun retrait au cours de la période -1, et un retrait de 2 000 F au cours de la période zéro, c'est-à-dire la période considérée.

Le risque total pour cette période zéro est alors égal à la somme des valeurs de la colonne correspondante, soit 1300 + 0 + 1000 + 0 + 2000 = 4300 F.

On voit ainsi que plus les retraits antérieurs ont eu lieu à une période reculée, plus leur incidence est faible dans le calcul du risque total, et inversement, ce qui est bien le résultat recherché.

On voit également que, en ce qui concerne les périodes à venir (périodes + 1, + 2, ...) le risque total va se réduire au fur et à mesure de la succession des périodes, à moins bien entendu que de nouveaux retraits interviennent, provoquant ainsi une augmentation à nouveau de la valeur du risque total.

*Détermination du montant finalement accordé*

A partir du risque total $RT_0$ correspondant à la période en cours, déterminé par le bloc 7 de la manière que l'on vient d'exposer, le limiteur de risque va prendre une décision concernant le montant à accorder MA.

Si l'on appelle S le risque maximal accepté par l'exploitant du distributeur, le limiteur de risque va accorder un montant MA égal à la plus faible des deux valeurs:
MD c'est-à-dire le montant demandé, et
$(S-RT_0)$ c'est-à-dire le risque maximal diminué de la valeur instantanée du risque total RT.

La détermination de $S-RT_0$ est effectué par le bloc 11, et celle du montant accordé MA par le bloc 2.

Généralement, le plafond de risque S n'est pas un paramètre fixe, unique ; il peut être constitué de plusieurs éléments, désignés $S_0$, $S_1$ et $S_2$, dont le principal est $S_0$ (la manière dont $S_1$ et $S_2$ sont

déterminés et combinés à $S_0$ sera décrite plus bas).

La plafond $S_0$ pourrait être fixe et égal à une valeur de consigne introduite par l'opérateur via un organe d'entrée 12. Le taux d'incidents (c'est-à-dire le pourcentage de fois où MA < MD), et donc le taux d'indisponibilité du distributeur, dépendraient alors du profil d'utilisation et fluctueraient dans le temps.

Pour pallier cet inconvénient, on prévoit un asservissement de la valeur $S_0$ tel que le taux moyen d'incidents reste constant et égal à une valeur de consigne fixée par l'opérateur, par exemple 1 incident tout les 500 retraits en moyenne. La détection des incidents (MA < MD) est effectuée par le bloc 13 et l'asservissement par le bloc 14. Les procédés d'asservissement sont des procédés en eux-mêmes connus du spécialiste de cette technique, et pour cette raison ne seront pas décrits ici en détail.

La réponse élaborée par le bloc 2 est soit une absence de limitation (le distributeur accorde un montant MA = MD), soit une limitation (effet de « freinage ») c'est-à-dire que le distributeur accorde un montant MA < MD, soit un refus de distribution (MA = 0).

Les simulations qui ont été effectuées montrent que, par mise en oeuvre du procédé de l'invention, on peut détecter une fraude potentielle dès qu'elle atteint quelques retraits successifs. Le limiteur de risque entre alors très rapidement en action pour diminuer, puis éventuellement annuler, pendant un certain temps la valeur MA, de façon à retarder et donc perturber l'action du fraudeur.

Le temps de retour à une distribution normale est particulièrement long aux heures creuses (périodes nocturnes), c'est-à-dire aux moments préférés par les fraudeurs.

### Détermination des périodes u(t)

Comme on l'a vu plus haut, les performances du limiteur de risque dépendent directement de la qualité de la prédiction des instants $t_n$ successifs définissant la division du temps en périodes consécutives inégales de longueur $u(t_n)$. Par ailleurs, le nombre total de périodes au cours d'une même journée peut être très élevé, puisque la durée de certaines périodes peut être très courte.

Dans ces conditions, plutôt que de mémoriser et mettre à jour (pour la fonction d'asservissement) un très grand nombre de points $u(t_n)$, on peut avec une bonne approximation ne conserver en mémoire qu'un nombre limité de valeurs discrètes préétablies V(n) et déterminer par interpolation, à partir de ces valeurs, la valeur u(t) à tout instant voulu.

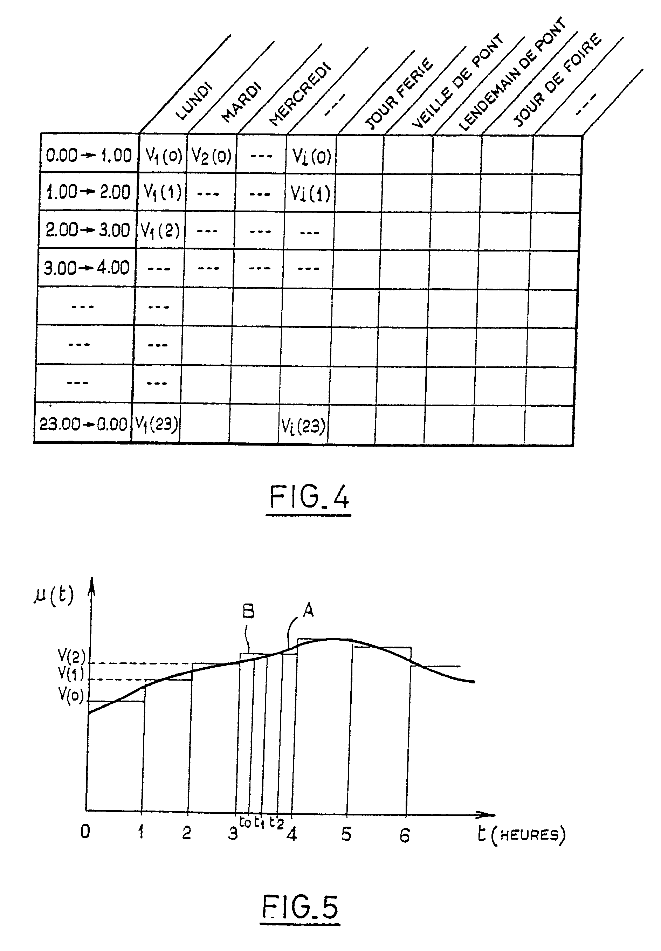

Ces valeurs V(n) peuvent notamment être constituées des valeurs prises par la fonction u(t) aux heures rondes de la journée, ce qui limite la mémorisation et la mise à jour à 24 valeurs (correspondant à une colonne de valeurs dans le tableau de la figure 4).

Parmi un grand nombre de méthodes d'interpolation possibles et connues, on pourra, par exemple pour une valeur de t comprise entre $t_n$ = 18 heures et $t_{n+1}$ = 19 heures, déterminer la courbe du troisième degré passant par les quatre points:

| t = 17 | t = 18 | t = 19 | t = 20 |
|---|---|---|---|
| u = V(17) | u = V(18) | u = V(19) | u = V(20) |

On détermine ainsi, comme illustré figure 5, une courbe continue, référencee A, à partir d'un certain nombre de valeurs discrètes, référencées B.

De façon générale, on pourra par ce procédé, à partir d'une valeur $t_0$, déterminer $u(t_0)$, puis $t_1$ grâce à la relation:

$t_1 = t_0 + u(t_0)$

puis, de proche en proche, $t_2$, $t_3$, ... $t_n$, ... etc.

Ces calculs sont effectués par le bloc 5 de la figure 1, à partir des coefficients V(n) conservés dans le bloc 15.

Ce bloc 15 procède en outre à l'asservissement des valeurs V(0), V(1),... V(23), de façon à maintenir la condition fondamentale que la probabilité de retrait par période u(t) soit essentiellement constante et égale à 40 %. Les procédés d'asservissement sont bien connus des spécialistes de la technique et, pour cette raison, ne seront pas décrits ici en détail.

### Prise en compte des variations cycliques dans le calcul des périodes u(t)

La densité temporelle des retraits, c'est-à-dire le profil d'utilisation du distributeur dans le journée, qui est représentée par les 24 valeurs $V(0)$, $V(1)$, $V(2)$, ... $V(23)$, subit en fait dans le temps des variations cycliques, c'est-à-dire que le profil d'utilisation n'est pas le même un lundi, un dimanche, un jour férié, etc.

Il est donc souhaitable d'utiliser non pas un profil journalier type, constitué d'une unique série de 24 valeurs, mais des profils différents selon les jours du calendrier. Ces profils sont représentés par un tableau tel que celui de la figure 4 comportant un certain nombre de colonnes (fonction du calendrier) et 24 lignes (fonction de l'heure).

Le limiteur de risque est doté d'une horloge 8 et d'un calendrier 16 qui pourra être programmé longtemps à l'avance par un opérateur, au moyen de la commande 17, de manière à définir les jours exceptionnels (jours fériés, jours de foire, veilles de ponts, ...) où le profil d'utilisation est atypique.

Le calendrier 16 et le bloc 17 sélectionnent alors la colonne et la ligne à utiliser dans le tableau (mémorisé dans le bloc 15) pour le calcul de $u(t)$ (effectué dans le bloc 5).

On peut diminuer considérablement le nombre de colonnes du tableau V, jusqu'à une dizaine ou une douzaine de colonnes, en remarquant que la fonction V subit des variations cycliques dont on peut tenir compte par des coefficients de pondération qui assurent, par exemple, une correction en fonction du quantième à l'intérieur du mois et/ou du mois à l'intérieur de l'année.

Le coefficients sont déterminés à l'avance par des méthodes d'analyse statistique classiques (analyse harmonique), qui sont connues du spécialiste et, pour cette raison ne seront pas décrites plus en détail ici.

Ces coefficients correcteurs sont déterminés par le bloc 18, qui les applique au bloc 5 pour assurer la pondération appropriée lors du calcul des valeurs de $u(t)$.

*Amélioration de l'estimation du plafond de risques*

On a indiqué plus haut que le plafond de risque était déterminé notamment à partir d'une valeur fixe de consigne $S_0$ initialement introduite par l'opérateur dans le dispositif.

On a indiqué également que l'on évaluait initialement et que l'on asservissait cette valeur $S_0$ de manière à maintenir essentiellement constant le taux d'incident (c'est-à-dire le nombre de fois où le dispositif refuse de délivrer la totalité du montant demandé).

L'expérience montre cependant que la répartition dans le temps des incidents n'est pas aléatoire, mais que ceux-ci proviennent généralement de phénomènes d'afflux soudains et périodiques de porteurs, liés par exemple à une heure de sortie de cinéma, d'arrivée d'un car ou d'un train, etc.

On peut améliorer les réactions du limiteur de risque en ajoutant un tableau supplémentaire, de structure semblable à celle du tableau V de la figure 4. À chaque incident constaté par le bloc 13 (c'est-à-dire chaque fois que l'on aura MA < MD), on ajoute dans la case correspondante du tableau une somme fixe (2000 F par exemple) et on retranche dans toutes les autres cases une quantité égale (dans cet exemple, de 2000/23 F) de manière que la colonne du tableau soit une fonction normée, c'est-à-dire que la somme de toutes les cases de la colonne soit égale à zéro.

Par interpolation, de préférence avec la même méthode que celle utilisée pour déterminer $u_n(t)$ à partir du tableau $V(t)$, le bloc 19 du limiteur de risque calcule une fonction $S_1(t)$ qui est ajoutée à $S_0$ (la fonction additive pouvant être remplacée par une fonction multiplicative), d'où:

$S(t) = S_0(t) + S_1(t)$

Cette opération supplémentaire va rendre complètement aléatoire l'apparition des incidents, en supprimant l'effet des causes répétitives.

De la même façon, on peut ajuster le plafond de risque S de manière à tenir compte également des profils typiques de fraudes. L'opérateur introduit alors, par le bloc 20, les paramètres caractéristiques de transactions frauduleuses antérieurement constatées (montant le plus souvent demandé par un fraudeur, jour et heure préférés, etc.), qui permettra d'établir une fonction complémentaire $S_2$ déterminée et traitée de façon semblable à $S_1$ (bloc 21). La fonction $S_2$ obtenue viendra en déduction du risque total S, d'où:

$S(t) = S_0(t) + S_1(t) - S_2(t)$

Ici encore, la fonction additive (soustraction) pourra être remplacé par une fonction multiplicative (division).

Ainsi, un fraudeur qui essaierait de profiter plusieurs fois des mêmes circonstances ou des mêmes scénarios se verrait encore plus limité dans ses possibilités de fraudes, puisque le plafond de risque se trouvera automatiquement réduit lorsque ces circonstances particulières seront réunies.

EP 0 418 144 A1

*Prise en compte des utilisations anormalement faibles*

Comme on l'a indiqué plus haut, le risque total RT calculé s'atténue au cours du temps, jusqu'à devenir négligeable, si aucun retrait n'est effectué pendant plusieurs périodes consécutives.

L'invention permet de tenir compte aisément des utilisations anormalement faibles, ce qui, dans certains cas, peut être considéré comme le signe précurseur d'un fraude.

Pour contrer une telle fraude, on ajoute au risque total RT un risque supplémentaire ou risque aggravé RX, qui dépendra de la probabilité pour qu'il n'y ait pas de demande de retrait sur p périodes consécutives. Dans l'exemple choisi (probabilité de 40% qu'un retrait ait lieu au cours d'une période), la probabilité correspondante sera $(0,6)^p$.

Le limiteur de risque est doté d'un compteur de périodes (bloc 22) qui est incrémenté d'une unité à chaque changement de période et remis à zéro à chaque demande de retrait.

Si l'on accepte un niveau d'incident de 1 incident pour 500 retraits, soit un incident pour 1250 périodes, la valeur de p à partir de laquelle on peut considérer comme anormal qu'il n'y ait pas eu de demande de retrait est donnée par:

$(0,6)^p$ = 1/1250, soit : p = 14

En pratique, on pourra prendre une valeur un peu plus élevée, par exemple p = 16.

On contre alors la fraude exposée plus haut en ajoutant au limiteur de risque une fonction supplémentaire qui annulera (S-RT) lorsque p ≧ 16.

En pratique, cette fonction pourra être réalisée de façon simple par introduction de retraits fictifs qui viendront augmenter RT.

Ainsi, à partir de la période correspondant à p = 16 -(S/2000), soit environ p = 12, on augmentera (bloc 23) artificiellement RT en ajoutant un retrait fictif du montant maximal (2000 F dans cet exemple).

Ce montant fictif entraînera le calcul d'un risque élémentaire par le bloc 6, et donc une mise à jour et une augmentation du risque total RT par le bloc 7.

S'il n'y a toujours pas de demande de retrait au cours de la période suivante, on réitère l'opération jusqu'à la période p = 16 (et au-delà), jusqu'à ce que (S-RT) devienne faible ou nul.

La première demande de retrait qui interviendra alors provoquera la remise à zéro du compteur 22. Mais toutefois, du fait du risque total RT artificiellement augmenté, le montant accordé MA restera nul ou faible pendant un certain nombre de périodes, ce qui est le but recherché.

Bien entendu, le distributeur peut être arrêté pour des raisons normales telles qu'un épuisement du stock de billets, une opération d'entretien, des essais, etc. On suspendra alors le fonctionnement du compteur t, de façon à permettre un redémarrage immédiat si l'arrêt est considéré comme normal (bloc 24).

*Initialisation du limiteur de risque*

On considérera que le limiteur de risque fonctionne de façon normale lorsque le paramètre S (plafond de risque) et les éléments du tableau V prennent des valeurs sensiblement stables.

La période d'initialisation peut ainsi aller de deux mois (pour les jours de la semaine) à plus d'un an (pour tenir compte des jours fériés et des dates exceptionnelles, des coefficients correcteurs saisonniers de pondération, etc.).

Pendant la période d'initialisation, on évitera les incidents intempestifs en donnant à $S_0$ une valeur initiale élevée.

Pour réduire la période d'initialisation, on donnera aux différents asservissements du limiteur de risque des constantes de temps relativement faibles, que l'on fera croître progressivement jusqu'aux valeurs finales.

On pourra également réduire considérablement le temps d'initialisation par utilisation de valeurs provenant d'autres distributeurs dont les profils d'utilisation sont semblables.

Les opérations d'initialisation du limiteur de risque sont réalisées par un organe superviseur interne 26, à partir des paramètres introduits par l'opérateur par l'intermédiaire d'un organe 25.

**Revendications**

10

1. Un procédé d'analyse et de contrôle du déroulement de transactions informatiques dans lequel, à chaque transaction:

- un utilisateur requiert d'un dispositif la délivrance de biens, de services ou de valeurs pour un montant demandé (MD) donné,

- le dispositif analyse cette requête par comparaison avec des données statistiques prédéterminées, représentatives de l'évaluation d'un risque d'utilisation non conforme, ces données statistiques comprenant des données relatives au nombre moyen ou au montant moyen des transactions effectuées au cours de périodes successives données, et

- le dispositif élabore une réponse autorisant ou non, en fonction du résultat de cette analyse, la délivrance d'un montant accordé (MA),

caractérisé en ce que lesdites données statistiques prédéterminées résultent d'une division du temps en périodes consécutives, inégales, dont les durées $(u_n)$ sont choisies de telle manière que la probabilité $(u_n(t))$ qu'une transaction soit effectuée ou qu'un montant moyen soit demandé au cours de chacune de ces périodes soit essentiellement constante.

2. Le procédé de la revendication 1, dans lequel:

- le dispositif élabore et met à jour au cours du temps une fonction donnant une évaluation d'un niveau de risque total (RT), et

- en cas de transaction, le dispositif limite, à un instant donné, la délivrance du montant accordé (MA) à une valeur au plus égale à la fois au montant demandé (MD) et à une limite (S-RT) égale à un plafond prédéterminé (S) diminué de la valeur instantanée du risque total (RT).

3. Le procédé de la revendication 2, dans lequel, à l'intérieur de chaque période, le dispositif met à jour la valeur du risque total (RT) par addition, après chaque transaction, de la valeur d'un niveau de risque élémentaire (RE(n)) attaché à cette transaction, à la valeur précédente (RT) du risque total.

4. Le procédé de la revendication 3, dans lequel le risque élémentaire (RE(n)) attaché à chaque transaction est une fonction donnant, pour chacune des périodes successives à venir, une série d'évaluations successives déterminées à partir du montant accordé délivré par le dispositif pour cette transaction, ces évaluations successives étant déterminées de manière à donner une évaluation du risque élémentaire essentiellement décroissante en fonction du rang des périodes successives.

5. Le procédé de la revendication 2, dans lequel ledit plafond prédéterminé (S) est déterminé à partir d'une valeur fixe de consigne $(S_0)$ initialement introduite dans le dispositif et dans lequel, en outre, le dispositif:

- détermine l'apparition d'un incident lorsqu'il ne délivre qu'un montant accordé (MA) inférieur au montant demandé (MD), et

- asservit ladite valeur fixe de consigne initialement introduite $(S_0)$ sur un taux moyen d'incidents essentiellement constant au cours du temps.

6. Le procédé de la revendication 1, dans lequel lesdites durées $(u_n)$ définissant la division du temps en périodes consécutives inégales sont déterminées par interpolation à partir des valeurs d'un tableau (V) de valeurs discrètes statistiques préétablies correspondant à une division du temps en tranches consécutives.

7. Le procédé de la revendication 6, dans lequel le dispositif:

- détermine l'apparition d'un incident lorsqu'il ne délivre qu'un montant accordé (MA) inférieur au montant demandé (MD), et

- asservit lesdites valeurs discrètes statistiques préétablies initialement introduites de manière à maintenir essentiellement constante la probabilité $(u_n(t))$ qu'une transaction soit effectuée ou qu'un montant moyen soit demandé au cours de chacune des périodes correspondantes.

8. Le procédé de la revendication 6, dans lequel le dispositif utilise un tableau (V) de valeurs discrètes statistiques différent pour chacun des différents jours.

9. Le procédé de la revendication 6, dans lequel, en outre, le dispositif pondère les valeurs discrètes statistiques du tableau (V) en fonction des variations cycliques constatées desdites valeurs, notamment selon le quantième du mois et/ou le mois de l'année.

10. Le procédé de la revendication 6, dans lequel, en outre, le dispositif pondère les valeurs discrètes statistiques du tableau (V) en fonction des paramètres typiques liés à des transactions frauduleuses antérieurement constatées.

11. Le procédé de la revendication 4, dans lequel:

- le dispositif élabore et met à jour au cours du temps une évaluation d'un niveau de risque aggravé (RX) inversement fonction de la probabilité pour que, à un instant donné, il n'y ait pas eu de transaction effectuée depuis un nombre donné (p) de périodes consécutives, le risque aggravé étant ajouté au risque total (RT) sous forme d'une transaction fictive de montant donné (RX), et

- en cas de transaction dans une période postérieure, le dispositif limite, à un instant donné, la délivrance du montant accordé (MA) à une valeur au plus égale à la fois au montant demandé (MD) et à ladite limite

(S-RT).

EP 0 418 144 A1

FIG.1

DISTRIBUTEUR (DIALOGUE AVEC L'UTILISATEUR)

LIMITEUR DE RISQUE

COMMANDES OPÉRATEUR

**1** DEMANDE : MONTANT DEMANDE(MD)

**2** ÉLABORATION DE LA RÉPONSE (MA)

**3** PROPOSITION= MONTANT ACCORDÉ(MA)

**4** CHOIX : MONTANT EFFECTIF(ME)

**5** CALCUL $\mu(t_n)$ ET $t_n$

**6** CALCUL DES RISQUES ÉLÉMENTAIRES(RE)

**7** ADDITIONNEUR : RISQUE TOTAL(RT)

**8** HORLOGE

**9** CHANGEMENTS DE PÉRIODE $t = t_1$

**10** DÉCALAGE DES PÉRIODES

**11** CALCUL 5-RT(o)

**12** VALEUR DE CONSIGNE So

**13** DÉTECTION DES INCIDENTS (MA<MD)

**14** ASSERVISSEMENT DE So

**15** TABLEAU V ET ASSERVISSEMENT

**16** CALENDRIER

**17** SÉLECTION LIGNE ET COLONNE

**18** COEFFICIENTS CORRECTEURS

**19** FONCTION S1

**20** DESCRIPTION DES FRAUDES

**21** FONCTION S2

**22** COMPTEUR($t$)

**23** CALCUL DU RISQUE AGGRAVÉ

**24** DÉMARRAGE RAPIDE

**25** COMMANDE D'INITIALISATION

**26** INITIALISATION

**17** COMMANDE CALENDRIER

**So** CODE DE DÉMARRAGE RAPIDE

$RE(n)$  $RT(o)$  $RX$  $t_1$  $t$  $S1$  $S2$  $So$  ME  MA  MD

13

| n | 0 | 1 | 2 | 3 | 4 | 5 | --- | n | --- |
|---|---|---|---|---|---|---|---|---|---|
| RE(n) | MA | MA | MA | 0,853.MA | 0,625.MA | 0,5.MA | --- | $\frac{2,5}{n}$MA | --- |

## FIG.2

| n | -4 | -3 | -2 | -1 | 0 | 1 | 2 | --- | --- |
|---|----|----|----|----|---|---|---|-----|-----|
| RE(n) | 2000 | 2000 | 2000 | 1700 | 1300 | 1000 | 850 | --- | --- |
| RE(n) | | 0 | 0 | 0 | 0 | 0 | 0 | --- | --- |
| RE(n) | | | 1000 | 1000 | 1000 | 850 | 650 | --- | --- |
| RE(n) | | | | 0 | 0 | 0 | 0 | --- | --- |
| RE(n) | | | | | 2000 | 2000 | 2000 | --- | --- |
| RT(n) | | | | | 4300 | 3850 | 3500 | --- | --- |

## FIG.3

| | LUNDI | MARDI | MERCREDI | --- | JOUR FERIE | VEILLE DE PONT | LENDEMAIN DE PONT | JOUR DE FOIRE | --- |
|---|---|---|---|---|---|---|---|---|---|
| 0.00 → 1.00 | $V_1(0)$ | $V_2(0)$ | --- | $V_i(0)$ | | | | | |
| 1.00 → 2.00 | $V_1(1)$ | --- | --- | $V_i(1)$ | | | | | |
| 2.00 → 3.00 | $V_1(2)$ | --- | --- | --- | | | | | |
| 3.00 → 4.00 | --- | --- | --- | --- | | | | | |
| --- | --- | | | | | | | | |
| --- | --- | | | | | | | | |
| --- | --- | | | | | | | | |
| 23.00 → 0.00 | $V_1(23)$ | | | $V_i(23)$ | | | | | |

## FIG.4

## FIG.5

# Office européen des brevets

## RAPPORT DE RECHERCHE EUROPEENNE

Numéro de la demande

**EP 90 40 2497**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 812 628   (BOSTON ET.AL.)<br>* abrégé; revendications 1-8; figures 1-3 * | 1-11 | G 07 F 7/08<br>G 06 F 15/21 |
| A | WO-A-8 906 398   (MICHAUD)<br>* le document en entier * | 1-11 | |
| A | EP-A-0 200 343   (VISA INTERNATIONAL SERVICE ASSO-CIATION)<br>* abrégé; revendications 1-9; figures 1, 2 * * page 6, ligne 1 - page 7, ligne 12 @ page 8, ligne 20 - page 12, ligne 9 * | 1-11 | |
| A | GB-A-2 189 064   (A.C. NIELSEN COMPANY)<br>* abrégé; revendications 1-6; figures 3, 8-13 * | 1,4-7 | |
| A | GB-A-2 151 061   (TICKETSHOP LTD.)<br>* abrégé; revendications 1, 3-10 * | 1,3 | |
| A | GB-A-2 118 341   (VISA USA INC.)<br>* abrégé; revendication 1; figure * | 1,2 | |
| A | US-A-3 982 103   (GOLDMAN)<br>* abrégé; revendications 1-9; figure 2 * | 1 | **DOMAINES TECHNIQUES RECHERCHES (Int. Cl.5)** |
| A | US-A-3 891 830   (GOLDMAN) | | G 07 F<br>G 07 G<br>G 06 F |

Le présent rapport de recherche a été établi pour toutes les revendications

| Lieu de la recherche | Date d'achèvement de la recherche | Examinateur |
|---|---|---|
| La Haye | 07 décembre 90 | GUIVOL,O. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant